# EUROPÄISCHE PATENTSCHRIFT

(11) **EP 2 488 986 B1**
(45) Veröffentlichungstag und Bekanntmachung des Hinweises auf die Patenterteilung: **28.03.2018**
(21) Anmeldenummer: 10784774.1
(22) Anmeldetag: 24.11.2010
(51) Int. Cl.: G06F 21/12, G06F 9/455

(54) **VERFAHREN UND VORRICHTUNG ZUM BETREIBEN EINER VIRTUELLEN MASCHINE GEMÄSS EINER ZUGEORDNETEN RECHTEINFORMATION**
METHOD AND DEVICE FOR OPERATING A VIRTUAL MACHINE IN ACCORDANCE WITH AN ASSOCIATED INFORMATION ON ASSIGNMENT OF RIGHTS
PROCÉDÉ ET DISPOSITIF D'EXPLOITATION D'UNE MACHINE VIRTUELLE EN FONCTION D'UNE INFORMATION DE DROITS CORRESPONDANTE

(30) Priorität: 29.12.2009 DE 102009060686
(43) Veröffentlichungstag der Anmeldung: 22.08.2012
(73) Patentinhaber: Siemens Aktiengesellschaft, 80333 München (DE)
(72) Erfinder: FALK, Rainer, 85435 Erding (DE); FRIES, Steffen, 85598 Baldham (DE); SELTZSAM, Stefan, 85737 Ismaning (DE)
(86) Internationale Anmeldenummer: PCT/EP2010/068142
(87) Internationale Veröffentlichungsnummer: WO 2011/080013

(56) Entgegenhaltungen:
- WO-A1-2008/087158
- US-A1- 2006 218 544
- US-A1- 2007 250 833

## Beschreibung

Die vorliegende Erfindung betrifft ein Verfahren sowie eine Vorrichtung, welche es erlauben Rechte zum Betreiben einer virtuellen Maschine effektiv durchzusetzen. Weiterhin betrifft die vorliegende Erfindung ein Verfahren zum Schutz einer virtuellen Maschine vor einem unbefugten Betreiben.

Cloud Computing bietet die Möglichkeit, Dienstleistungen basierend auf neuen Geschäftsmodellen anzubieten. Cloud Computing Dienstleistungen können dabei auf verschiedenen Ebenen zur Verfügung gestellt werden:
- Infrastruktur: Ein potentieller Kunde mietet reine Rechenleistung, um seine eigenen Dienste zu realisieren. Cloud Computing nutzt hierzu Rechenzentren, die sich entweder konzentriert an einem Ort befinden, oder die auch zur Erbringung von flexiblen Diensten zusammengeschaltet sein können.
- Plattform: Der Kunde erhält Zugriff auf eine Plattform, die zum einen die Infrastruktur für die Erbringung eines Dienstes beinhaltet, und zum anderen eine bestimmte Software (Middleware), mit deren Hilfe Dienste erstellt werden können.
- Software: Ein Kunde erhält Zugriff auf die komplette Applikation, die web-basiert den gewünschten Dienst erbringt.

Allen Ansätzen ist die Anforderung gemein, dass die zugrundeliegende Infrastruktur auf Abruf verfügbar sein soll. Die zur Verfügung gestellte Infrastruktur soll dabei möglichst flexibel gehandhabt werden können, so dass man Rechenleistung sehr schnell erweitern und die Verteilung der Dienste auf die Rechner dynamisch anpassen kann. Eine Möglichkeit dafür bietet die Technik der Virtualisierung, mit deren Hilfe auf einem Rechner vollkommen unabhängige sogenannte virtuelle Maschinen durch einen sogenannten Hypervisor ausgeführt werden können. Moderne Virtualisierungslösungen können mit entsprechender Hardwareunterstützung beliebige Betriebssysteme, Laufzeitumgebungen und Applikationen virtualisieren. Eine laufende Virtuelle Maschine kann jederzeit in einem sogenannten Image abgespeichert werden und auf einem beliebigen anderen Rechner mit einem Hypervisor wieder eingespielt und die Ausführung dort fortgesetzt werden. Dies wird als "Migrieren" einer virtuellen Maschine bezeichnet. Ein Vorteil dieses technischen Vorgehens ist, dass die Server besser ausgelastet sind, indem mehrere virtuelle Maschinen auf einem Server ausgeführt werden. Ein weiterer Vorteil ist, dass eine flexible Reaktion auf erhöhte oder verringerte Anforderungen einzelner virtueller Maschinen möglich ist. So kann beispielsweise eine virtuelle Maschine mit erhöhtem Ressourcenbedarf vorübergehend auf einen stärkeren Server transferiert und dort weiter ausgeführt werden.

Durch die globale Verteilung von Infrastruktur eines Cloud Computing Anbieters kann eine virtuelle Maschine weltweit migriert werden. Hierbei ist aber der Einfluss regulativer Anforderungen zu beachten, beispielsweise dass die Verbringung bestimmter Technologien in manchen Ländern verboten ist. Problematisch ist weiterhin, dass sich ein Nutzer einer Cloud Computing Infrastruktur in einem Land befindet, das unter einem Embargo anderer Länder steht. In einem solchen Fall darf die virtuelle Maschine eines solchen Kunden nur in wenigen Ländern oder nur mit bestimmten Beschränkungen ausgeführt werden.

Bei der Migration einer virtuellen Maschine -entweder zur Laufzeit oder auch zur Speicherung auf einer Festplatte zur späteren Ausführung- ist zudem die Sicherheit der Daten zu gewährleisten, um einen unberechtigten Zugriff auf die virtuellen Maschinen zu verhindern.

Andere Anforderungen können hinsichtlich unterschiedlicher Kundenwünsche entstehen. Ein potentieller Nutzer einer Cloud Computing Infrastruktur möchte eventuell den Kreis der involvierten Parteien für die Diensterbringung noch weiter einschränken. Ein andere Kunde eines Cloud Computing Dienstes wiederum will sicherstellen, dass bestimmte virtuelle Maschinen auf dedizierten Hosts seiner Cloud Computing Infrastruktur laufen.
Die US 2007/250833 A1 beschreibt ein Managementsystem für virtuelle Maschinen mit Richtlinieneinstellungen. Das Managementsystem sendet Management-Anweisungen, die die Richtlinieneinstellungen enthalten, um einen oder mehrere Hosts bei der Ausführung der virtuellen Maschinen zu steuern.
Die WO 2008/087158 A1 beschreibt ein computerimplementiertes Verfahren zur selektiven Aktivierung und Deaktivierung von mindestens einer virtuellen Maschine eines Host-Betriebssystems. Das computerimplementierte Verfahren umfasst die folgenden Schritte: Aktivieren eines Sicherheitsmechanismus in das Host-System und Deaktivieren mindestens einer virtuellen Maschine eines Host-Betriebssystems.
Die Aufgabe der vorliegenden Erfindung ist es daher, ein Verfahren zur Speicherung, Migration und/oder zum Betrieb von virtuellen Maschinen anzugeben, mit dem durch den Rechteinhaber vorgebbare Rechte durchgesetzt und ein unberechtigter Zugriff verhindert wird.
Dies wird durch die Merkmale der unabhängigen Patentansprüche erreicht, welche die Erfindung definieren. Durch das erfindungsgemäße Verfahren wird ein Image (Kopie) einer virtuellen Maschine vor einem unberechtigten Zugriff geschützt, unabhängig davon, wo und wie es gespeichert oder übertragen wird. Insbesondere wird auch ein Schutz gegen die Offline Analyse eines bei einem Infrastruktur Betreiber gespeicherten Images realisiert, da das geschützte Image in verschlüsselter Form vorliegt.
Die Rechteinformation kann bezüglich zumindest einem Teil der virtuellen Maschine Zugriffsinformationen beziehungsweise Zugriffsrechte definieren. Zum Beispiel ist es möglich, dass eine bestimmte Recheneinheit, welche zum Beispiel mittels einer IP-Adresse und/oder eines IP-Bereiches festgelegt wird, lediglich auf einzelne Teile der virtuellen Maschine Rechte erhält. Diese Rechte können beispielsweise auch eine Bindung einer virtuellen Maschine an dedizierte Rechner in einer Cloud Computing Infrastruktur sein. Eine bestimmte virtuelle Maschine darf dabei nur auf bestimmten, festgelegten Rechnern ausgeführt werden oder nur auf Rechnern, die bestimmte Kriterien erfüllen (beispielsweise Land, Zugehörigkeit zu einem Rechnerpool). Diese Rechte können aber auch einen Rechner betreffen, der nur bestimmte virtuelle Maschinen ausführen darf. Hier ist also für einen Rechner eingeschränkt, welche bestimmte virtuelle Maschine er ausführen darf oder welche Kriterien eine virtuelle Maschine erfüllen muss, damit er sie ausführen darf (beispielsweise nur die einem bestimmten Nutzer zugeordneten virtuellen Maschinen). Die Rechteinformation beschreibt, welche Nutzungsrechte oder Nutzungsbeschränkungen ein bestimmter Akteur auf die bereitgestellte virtuelle Maschine hat.

Nutzungsbeschränkungen bezüglich der Ausführung durch einen Host betreffen beispielsweise:
- Exportkontrollierte Funktionalitäten
- Rechte, die der Besitzer der virtuellen Maschine definiert hat, wie beispielsweise Ausführungsland, Provider, dem die Infrastruktur gehört, firmenpolitische Vorgaben, etc.
- Einschränkungen der Ausführungsumgebung durch den Cloud Computing Provider, beispielsweise zur Mandantentrennung.
- Funktionalitäten, die nur Kunden mit einem bestimmten Service Level Agreement zustehen (Premium Kunde)

Die Rechteinformation kann zusammen mit der virtuellen Maschine und/oder separat zu der virtuellen Maschine bereitgestellt werden.

Ferner ist es möglich, dass die Rechteinformation von einem ersten Server bereitgestellt wird und die virtuelle Maschine von einem zweiten Server bereitgestellt wird.

Sind zu dem Ausführen der virtuellen Maschine weitere Einheiten notwendig, so kann die Rechteinformation eben diese weiteren Einheiten spezifizieren.

Durch die virtuelle Maschine kann ein Nachbilden, Emulieren, Virtualisieren und/oder zumindest ein Teil davon durchgeführt werden. Zum Beispiel kann die virtuelle Maschine teils durch Emulieren und teils durch Virtualisieren durchgeführt werden. Hierbei werden physische Hardwareeinheiten eines Hostsystems, auch Gastsystem genannt, nachgebildet. Zum Beispiel umfasst das Hostsystem eine physische Hardwareeinheit, welche gemäß einem Wechseldatenträger als Lesegerät agiert. Eine physische Hardwareeinheit, zum Beispiel ein CD-Lesegerät, kann in der virtuellen Maschine gemäß einem Nachbilden simuliert werden. Hierbei stellt die virtuelle Maschine zumindest einen Teil der Funktionalität des physischen CD-Lesegeräts bereit. Bei der virtuellen Maschine kann es sich somit um eine Anzahl von Steuerbefehlen handeln, welche eine physische Hardwareeinheit oder eine Mehrzahl von physischen Hardwareeinheiten, welche miteinander interagieren, bereitstellt. Bei der somit erstellten virtuellen Maschine gemäß zumindest einer bereitgestellten Rechteinformation handelt es sich folglich um ein Abbild des Hostsystems gemäß einer bereitgestellten Spezifikation.

Das Nachbilden der physischen Hardwareeinheit ist besonders dann vorteilhaft, wenn die physische Hardwareeinheit in Betrieb ist und der Betrieb nicht unterbrochen werden kann. Bietet die physische Hardwareeinheit beispielsweise einen Dienst an, so kann sie nachgebildet werden und unter Verwendung der nachgebildeten, virtuellen Hardwareeinheit können Anforderungsparameter an die physische Hardwareeinheit bestimmt werden. Der angebotene Dienst kann somit ohne Unterbrechung der physischen Hardwareeinheit angeboten werden. Insbesondere ist es möglich, das Nachbilden von Hardwareeinheiten softwarebasiert durchzuführen. Hierzu können Betriebsparameterprofile ohne Modifikation des physischen Rechnersystems systematisch und reproduzierbar variiert werden.

Das Nachbilden kann auch ein Emulieren oder Virtualisieren veranlassen. Hierbei kann Emulieren das teilweise Bereitstellen von Funktionalität durch die virtuelle Hardwareeinheit umfassen, wobei nicht bereitgestellte Funktionalität von einer physischen Hardwareeinheit bereitgestellt werden kann. Virtualisieren kann hierbei das Bereitstellen von Funktionalität durch die virtuelle Hardwareeinheit umfassen. Die nachgebildete Hardwareeinheit liegt virtuell vor und wird beispielsweise durch eine Softwarekomponente und/oder durch eine Bibliothek beschrieben und/oder nachgebildet. Die physische Hardwareeinheit liegt physisch, also materiell, vor.

Emulieren kann das teilweise bereitstellen von Funktionalität durch die virtuelle Hardwareeinheit umfassen, wobei nicht bereitgestellte Funktionalität von einer physischen Hardwareeinheit bereitgestellt werden kann. Beispielsweise können bei einem Emulieren Lesezugriffe auf einen ersten Datensatz einer Festplatte durch eine virtuelle Hardwareeinheit ausgeführt werden und Schreibzugriffe auf einen zweiten Datensatz der Festplatte durch eine physische Hardwareeinheit ausgeführt werden.

Virtualisieren kann hierbei das vollständige Bereitstellen von Funktionalität durch die virtuelle Hardwareeinheit beschreiben. Beispielsweise werden bei einem Virtualisieren einer physischen Festplatte die Funktionalität der physischen Festplatte wie beispielsweise das Lesen und das Schreiben der Datensätze, durch eine virtuelle Festplatte ausgeführt. Eine virtuelle Festplatte ist hierbei eine virtuelle Hardwareeinheit, welche die Funktionalität einer physischen Festplatte durch Emulieren oder Virtualisieren bereitstellt. Betriebsparameter der virtuellen Hardwareeinheit wie beispielsweise die Speicherkapazität können hierbei unter Verwendung einer physischen Festplatte bereitgestellt werden.

Somit wird ein physisches Rechnersystem als ein virtuelles Rechnersystem nachgebildet, wobei das virtuelle Rechnersystem wiederum aus mehreren virtuellen Hardwareeinheiten bestehen kann.

Durch die Rechteinformation können also Zugriffs- und Nutzungsrechte an der virtuellen Maschine feingranular und bezüglich mehrerer Eigenschaften beschrieben werden.

In einer weiteren Ausführungsform des Verfahrens gemäß der vorliegenden Erfindung wird eine Policy für die virtuelle Maschine in Abhängigkeit der Rechteinformation erstellt. Dies hat den Vorteil, dass bereits etablierte Verfahren zur Verwendung der virtuellen Maschine wiederverwendet werden können.

In einer weiteren Ausführungsform des Verfahrens gemäß der vorliegenden Erfindung wird die virtuelle Maschine in Abhängigkeit der erstellten Policy konfiguriert, betrieben und/oder ausgeführt. Dies hat den Vorteil, dass die Policy sowohl zur Laufzeit einem Betreiben einer virtuellen Maschine als auch zu einer Erstellungszeit der virtuellen Maschine Anwendung finden kann.

Weitere vorteilhafte Ausgestaltungen der Erfindung sind Gegenstand der Unteransprüche sowie der im Folgenden beschriebenen Ausführungsbeispiele. Im Weiteren wird die Erfindung anhand beispielhafter Implementierungen unter Bezugnahme auf die beigelegten Figuren näher erläutert. Es zeigen
- Figur 1: ein Blockdiagramm einer ersten Systemarchitektur für ein erfindungsgemäßes Verfahren mit einem Hypervisor zum Betrieb einer virtuellen Maschine,
- Figur 2: ein Blockdiagramm einer zweiten Systemarchitektur für ein erfindungsgemäßes Verfahren mit einem Virtual Machine Monitor zum Betrieb einer virtuellen Maschine.

Bei Virtualisierung wird ein Gast- Betriebssystem in einer virtuellen Maschine ausgeführt. Eine virtuelle Maschine ist ein virtueller Computer, welcher als Software ausgeführt ist. Die virtuelle Maschine wird jedoch auf einem Host, also einem physisch existierenden Computer, ausgeführt. Auf einem physischen Computer können gleichzeitig mehrere virtuelle Maschinen betrieben werden.

Ein Hypervisor oder Virtual Machine Monitor (VMM) ist eine Virtualisierungssoftware, die eine Umgebung für virtuelle Maschinen schafft. Die Virtualisierungssoftware lässt sich in einen Typ 1 und einen Typ 2 unterscheiden. Typ 1 läuft ohne weitere Software direkt auf der Hardware. Typ 2 setzt auf ein vollwertiges Betriebssystem auf.

Bei Typ 1 stellt die Plattform eine Virtualisierungslösung als eigene Schicht bzw. als Host Betriebssystem zur Verfügung. Gastsysteme laufen in eigenen Containern. Ein Typ-1-Hypervisor verbraucht in der Regel weniger Ressourcen, muss aber selbst über Treiber für alle Hardware verfügen.

Bei Typ 2 läuft eine Virtualisierungssoftware auf einem Standardbetriebssystem, in der wiederum Gastbetriebssysteme laufen können. Parallel können auf dem Host auch native Applikationen laufen. Ein Typ-2-Hypervisor nutzt die Gerätetreiber des Betriebssystems, unter dem er läuft.

Virtual Machine Migration ermöglicht das Bewegen einer virtuellen Maschine von einem physikalischen Host zu einem anderen. Dabei wird im wesentlichen ein Speicherabbild (Image) einer virtuellen Maschine von einem Host zu einem anderen gesendet. Diese Migration kann auch im laufenden Betrieb vonstatten gehen.

Ein Aspekt der vorliegenden Erfindung ist es, den Schutz einer virtuellen Maschine bei deren Migration oder bei deren Speicherung in einem Image mittels einer digitalen Rechteverwaltung umzusetzen. Hierzu wird der Hypervisor bzw. der Virtual Machine Monitor, sowie die virtuelle Maschine um entsprechende Funktionalitäten erweitert.

Ein Beispiel für eine Rechteverwaltung ist beispielsweise das Enterprise Rights Management (ERM). Dies realisiert zum Beispiel einen Zugriffschutz auf Dokumente, unabhängig von einem Speicherort der Dokumente. Ein geschütztes Dokument kann von einem autorisierten Anwender nur entsprechend seiner dafür geltenden Zugriffsrechte geöffnet und bearbeitet werden, unabhängig davon, auf welcher Speichervorrichtung das Dokument gespeichert wurde bzw. an welche Recheneinheit das Dokument versandt wurde. Ein nicht autorisierter Außenstehender, dem keine Zugriffsrechte gewährt wurden, kann mit einer Kopie des Dokuments, die zum Beispiel elektronisch übersendet wurde, keine Information erhalten.

In herkömmlichen Verfahren erfolgt eine Verschlüsselung von Dokumenten gemäß mindestens einem Verschlüsselungsalgorithmus. Der Herausgeber eines Dokuments verschlüsselt ein Dokument bevor er es freigibt und definiert zusätzlich die Rechte spezifischer Benutzer oder Gruppen am Inhalt des Dokuments in einer Rechteinformation. Die verschlüsselte Datei kann mitsamt der Rechteinformation an einen ERM Server übersendet werden. Zusätzlich kann die Rechteinformation einen Schlüssel aufweisen, der zum Verschlüsseln des Dokumentes verwendet wird. Da eben dieser Schlüssel eine geheime Information darstellt, kann die Rechteinformation mit dem öffentlichen Schlüssel des ERM Servers verschlüsselt werden und der Herausgeber kann die Rechteinformation digital signieren.

Zusätzlich zu dem ERM Server, welcher einen zentralen Teil der Rechteverwaltung darstellt, gibt es einen ERM Client, welcher auf jeder zugreifenden Maschine installiert ist, welche zugriffsgeschützte Dokumente auslesen will. Der ERM Client kann hierbei die Kommunikation mit dem ERM Server übernehmen, um den Schlüssel und die Rechte eines vorliegenden Dokuments zu ermitteln. Der ERM Client kann die gelesenen Rechte an eine weitere Ausleseeinheit weitergeben, die für die Einhaltung der Rechte vorgesehen ist. Eine Entschlüsselung des Dokuments kann der ERM Client übernehmen, welcher ferner eine eventuell benötigte erneute Verschlüsselung zu einem späteren Zeitpunkt ausführt. Der Schlüssel kann durch den ERM Client mittels einer Verschlüsselungstechnik vor weiteren Ausleseeinheiten geheim gehalten werden. Hierzu werden in herkömmlichen Verfahren Verschlüsselungstechniken bzw. Verschleierungstechniken wie das sogenannte Code-Obfuscation verwendet.

Erfindungsgemäß umfasst nun der Hypervisor bzw. der Virtual Machine Monitor als zusätzliche Funktionalität einen Client, der in der Lage ist, die Rechteinformation, die dem Image einer virtuellen Maschine zugeordnet ist, von einem Server abzufragen und auszuwerten. Auch kann er, beispielsweise vor der Migration oder Speicherung einer virtuellen Maschine, die ihr zugeordneten Berechtigungen definieren. Weiterhin kann er entsprechende Rechteinformationen erzeugen und auf einem Server hinterlegen. Auf diese Weise wird das Image der virtuellen Maschine geschützt, um in Abhängigkeit der vorgegebenen Rechte die zugelassene Ausführungsumgebung der virtuellen Maschine entsprechend einzuschränken.

Diese Einschränkungen können eine Bindung einer virtuellen Maschine an dedizierte Rechner in einer Cloud Computing Infrastruktur sein. Eine bestimmte virtuelle Maschine darf dabei nur auf bestimmten, festgelegten Rechnern ausgeführt werden oder nur auf Rechnern, die bestimmte Kriterien erfüllen (beispielsweise Land, Zugehörigkeit zu einem Rechnerpool). Diese Einschränkungen können aber auch einen Rechner betreffen, der nur bestimmte virtuelle Maschinen ausführen darf. Hier ist also für einen Rechner eingeschränkt, welche bestimmte virtuelle Maschine er ausführen darf oder welche Kriterien eine virtuelle Maschine erfüllen muss, damit er sie ausführen darf (beispielsweise nur die einem bestimmten Nutzer zugeordneten virtuellen Maschinen).

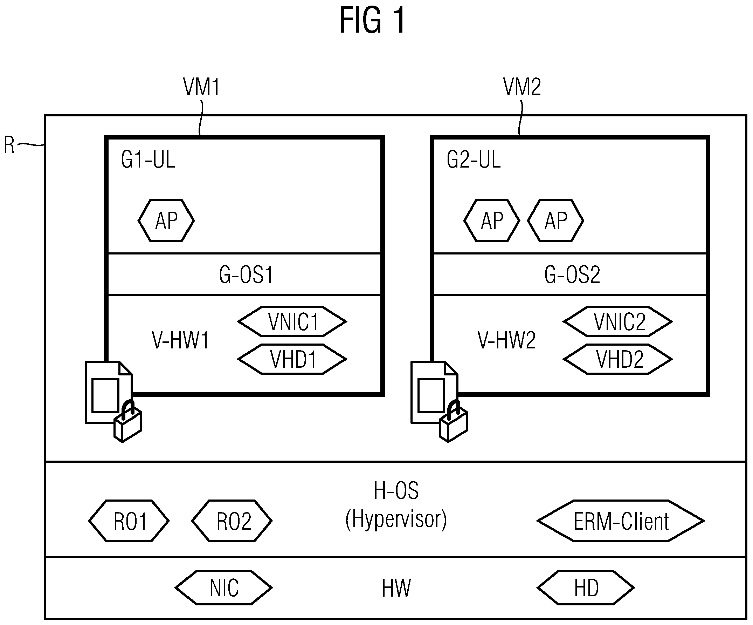

Die Figur 1 zeigt schematisch ein erstes Rechnersystem R, welches in einer Ausführungsform eines erfindungsgemäßen Verfahrens zum Schutz und/oder zum Betreiben einer virtuellen Maschine als Hostsystem für eine Virtualisierung verwendet werden kann. Das Hostsystem weist eine Vielzahl von Hardware-Komponenten HW, zum Beispiel den Netzwerkadapter NIC und die Festplatte HD, auf. Auf dem Hostrechner R kommt ein Hostbetriebssystem H-OS zum Einsatz, welches als ein Hypervisor vom Typ 1 ausgebildet ist. Der Hypervisor umfasst einen ERM Client und verwaltet zwei Rechteobjekte RO1 und RO2, die jeweils die Nutzungsrechte für die Ausführung einer virtuellen Maschine definieren. Diese Rechteobjekte sind direkt an die jeweilige virtuelle Maschine gebunden.

Auf dem Hostbetriebssystem H- OS laufen zwei ERM geschützte virtuelle Maschinen VM1 und VM2. Es wird durch den Hypervisor jeweils eine virtuelle Hardware V-HW1, V-HW2 mit einem virtuellen Netzwerkadapter VNIC1, VNIC2 und virtueller Festplatte VHD1, VHD2 bereitgestellt. In der virtuellen Maschine läuft jeweils ein Gast Betriebssystem G-OS1 und G-OS2. Weiterhin laufen im Benutzer Modus G1-UL, G2-UL der jeweiligen virtuellen Maschine Anwendungsprogramme AP.

Über den Netzwerkadapter NIC ist der Rechner mit einem Netzwerk verbunden, über das beispielsweise ein ERM Server kontaktierbar ist.

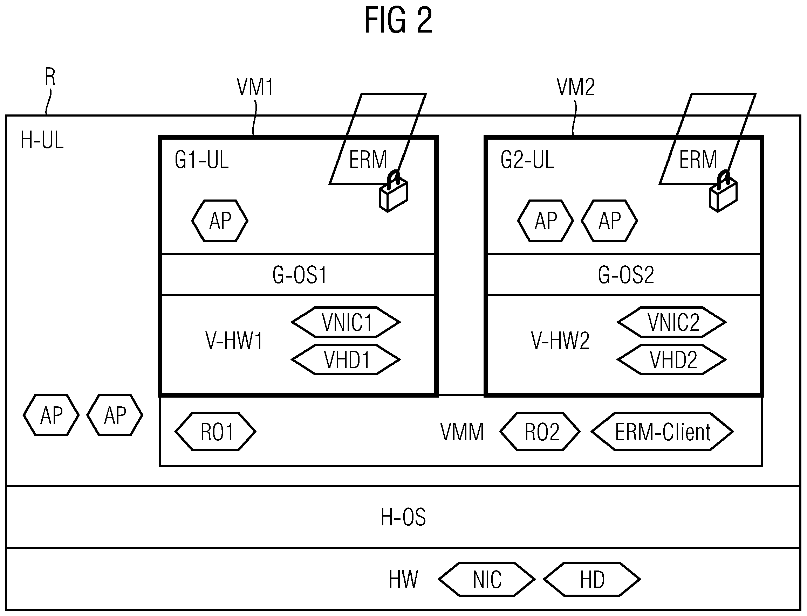

Figur 2 zeigt ein zweites Rechnersystem R, welches in einer Ausführungsform eines erfindungsgemäßen Verfahrens zum Schutz und/oder zum Betreiben einer virtuellen Maschine als Hostsystem für eine Virtualisierung verwendet werden kann. Das Host-system weist eine Vielzahl von Hardware-Komponenten HW, zum Beispiel den Netzwerkadapter NIC und die Festplatte HD, auf. Auf dem Hostrechner R kommt ein Hostbetriebssystem H-OS zum Einsatz. Hierbei kann ein Benutzermodus H-UL, auch als Userland bezeichnet, bereitgestellt werden, in dem Anwendungsprogramme AP ausgeführt werden. In der vorliegenden Figur 2 kommt eine Mehrzahl von Ausführungsprogrammen zum Einsatz, welche jeweils als AP bezeichnet werden. Folglich kann es sich bei den Anwendungsprogrammen AP jeweils um unterschiedliche Anwendungsprogramme AP handeln.

Ferner wird auf dem Hostrechner R ein Virtual-Machine-Monitor VMM vom Typ 2 ausgeführt, welcher eine virtuelle Ausführungsumgebung bereitstellt. Der Virtual Machine Monitor VMM umfasst einen ERM Client und verwaltet zwei Rechteobjekte RO1 und RO2, die jeweils die Nutzungsrechte für die Ausführung einer virtuellen Maschine definieren. Diese Rechteobjekte RO1 RO2 sind direkt an die jeweilige virtuelle Maschine gebunden.

Ferner werden zwei ERM geschützte virtuelle Maschinen VM1 und VM2 zur Ausführung gebracht. Es wird durch den virtuellen Maschinenmonitor VMM jeweils eine virtuelle Hardware V-HW1, V-HW2 mit einem virtuellen Netzwerkadapter VNIC1, VNIC2 und einer virtuellen Festplatte VHD1, VHD2 bereitgestellt. In der virtuellen Maschine VM wird jeweils ein Gastbetriebssystem G-OS1, G-OS2 betrieben. Im Benutzermodus G1-UL, G2-UL der jeweiligen virtuellen Maschine VM werden mehrere Anwendungsprogramme AP ausgeführt.

Zudem ist der Rechner R über den Netzwerkadapter NIC mit einem Netzwerk derart verbunden, dass ein Rechteserver angesprochen werden kann.

In einer Ausführungsform des Verfahrens zum Betreiben der virtuellen Maschine gemäß der vorliegenden Erfindung werden auf dem ersten oder zweiten Rechnersystem R vor dem Start einer virtuellen Maschine auf dem jeweiligen Rechnersystem durch den ERM Client des Hyervisors die Nutzungsbedingungen eines VM-Images geprüft. Abhängig vom Ergebnis wird die Ausführung der VM gewährt oder verweigert.

Dazu werden folgende Schritte durch einen Hypervisor, der dazu die Funktinalität eines ERM Clients umfasst, durchgeführt:
- Empfang eines Signals zum Anstarten einer bestimmten VM
- Laden des ERM- geschützten VM- Images der anzustartenden VM
- Authentisierung gegenüber einem Rechte Server (ERM-Server)
- Anfordern der der anzustartenden VM zugeordneten Rechteinformation vom Rechte-Server (ERM-Server)
- Bestimmen der Berechtigung zum Start der VM
- Im negativen Fall: Abbruch (Ausführung der VM wird verweigert)
- Im positiven Fall: Ermitteln eines Schlüssels aus der Rechteinformation; Aufheben des ERM-Schutzes des ERM-geschützten VM-Images (d.h. Entschlüsseln des VM-Images mithilfe des ermittelten Schlüssels); Ausführen des entschlüsselten VM-Images

In einer Ausführungsform des Verfahrens zum Schutz der virtuellen Maschine gemäß der vorliegenden Erfindung werden auf dem ersten oder zweiten Rechnersystem R bei einer Migration einer virtuellen Maschine bzw. dem Abspeichern des Images einer virtuellen Maschine folgende Schritte durch den Hypervisor durchgeführt:
- Empfang eines Signals zum Beenden der Ausführung einer bestimmten VM
- Beenden der VM-Ausführung
- Erzeugen eines (ungeschützten) modifizierten VM-Images (dieses ist i.A. unterschiedlich zu dem ursprünglichen VM-Image, das oben geladen wurde, da die VM ausgeführt wurde und so ihren Zustand verändert hat, z.B. geänderte Daten) Alternativ wird hier eines zweites Image erzeugt, das die Laufzeitdaten enthält und an das eigentliche VM Image gebunden ist. Das ermöglicht ein generelles Verteilen eines VM Images zu einem beliebigen Zeitpunkt, so dass bei einer Migration zur Laufzeit nur noch die Laufzeitdaten transportiert werden müssen.
- Anwenden von ERM-Schutz auf das (ungeschützte) modifizierte VM-Image und Erzeugen eines modifizierten ERM-geschützten VM-Images. Hierzu wird das modifizierte VM-Image mit einem Schlüssel verschlüsselt, um das ERM-geschützte modifizierte VM-Image zu erhalten. Dazu wird vorteilhafterweise der oben zum Entschlüsseln verwendete Schlüssel verwendet. Alternativ kann ein neuer Schlüssel verwendet werden, z.B. ein (pseudo-) zufällig erzeugter, der dann an den ERM-Server übertragen wird.
- Migrieren des ERM-geschützten VM-Images, bzw. speichern des ERM-geschützten VM-Images.
Die Rechte des geschützten Image der virtuellen Maschine werden auf einem ERM Server, beispielsweise durch einen Administrator, verwaltet.

Die beschriebenen Verfahrensschritte können iterativ und/oder in anderer Reihenfolge ausgeführt werden.

Durch die vorgeschlagene Lösung kann die Ausführung einer virtuellen Maschine bei einem Infrastrukturprovider flexibel gesteuert werden. Dadurch können regulative oder durch administrative Vorgaben gewünschte Beschränkungen robust durchgesetzt werden. Dies betrifft die generelle Ausführung einer virtuellen Maschine, die Speicherung des Image einer virtuellen Maschine auf einem Datenspeicher und auch die Migration auf einen anderen Rechner. Durch die angewendeten Maßnahmen besteht für den Betreiber und für den Anwender die Möglichkeit die Ausführungsumgebung der virtuellen Maschine zu kontrollieren und zu beeinflussen.

## Patentansprüche

1. Verfahren zum Schutz einer virtuellen Maschine (VM1, VM2), wobei durch einen Client (ERM-Client), der als zusätzliche Funktion eines Hypervisors (H-OS) bzw. eines Virtual-Machine-Monitors (VMM) ausgebildet ist, die folgenden Schritte ausgeführt werden:
- Erzeugen einer Kopie der virtuellen Maschine (VM1, VM2),
- Verschlüsseln der kopierten virtuellen Maschine (VM1, VM2) mit einem geheimen Schlüssel,
- Bereitstellen zumindest einer Rechteinformation (RO1, RO2) umfassend den geheimen Schlüssel, eine Nutzungsberechtigung und einen Hinweis auf eine Zugriffsberechtigung,
- Zuordnen der Rechteinformation (RO1, R02) zu der verschlüsselten virtuellen Maschine (VM1, VM2),
wobei die Rechteinformation (RO1, R02) mit einem öffentlichen Schlüssel eines Servers verschlüsselt wird,
die verschlüsselte virtuelle Maschine (VM1, VM2) und die zugeordnete Rechteinformation (RO1, R02) abrufbar auf dem Server gespeichert werden; und
- Migrieren der geschützten virtuellen Maschine (VM1, VM2), wobei durch einen Client (ERM-Client), der als zusätzliche Funktion eines Hypervisors (H-OS) bzw. eines Virtual-Machine-Monitors (VMM) ausgebildet ist, die folgenden Schritte ausgeführt werden:
- Anfordern der mindestens einer Rechteinformation (RO1, R02) vom Server, welche der virtuellen Maschine (VM1, VM2) zugeordnet ist,
- Ermitteln der Nutzungsberechtigung zum Betrieb der virtuellen Maschine (VM1, VM2) aus der mindestens einen angeforderten Rechteinformation (RO1, R02), und
- Ermitteln des geheimen Schlüssels aus der mindestens einen angeforderten Rechteinformation (RO1, R02) bei der ermittelten Nutzungsberechtigung zum Betrieb der virtuellen Maschine (VM1, VM2),
- Entschlüsseln der virtuellen Maschine (VM1, VM2) mit dem ermittelten Schlüssel und Betrieb der entschlüsselten virtuellen Maschine (VM1, VM2) im Umfang der ermittelten Nutzungsberechtigung.

2. Verfahren nach Anspruch 1, wobei die zumindest eine bereitgestellte Rechteinformation (RO1, R02) ferner einen Zeitstempel aufweist.

3. Verfahren nach einem der Ansprüche 1 oder 2, wobei die Rechteinformation (RO1, RO2) mittels des Servers abgespeichert und/oder bereitgestellt wird.

4. Verfahren nach einem der Ansprüche 1 bis 3, wobei eine Policy für die virtuelle Maschine (VM1, VM2) in Abhängigkeit der Rechteinformation (RO1, R02) erstellt wird.

5. Verfahren nach Anspruch 4, wobei die virtuelle Maschine (VM1, VM2) in Abhängigkeit der erstellten Policy konfiguriert, betrieben und/oder ausgeführt wird.

6. Vorrichtung zum Betreiben einer virtuellen Maschine (VM1, VM2) gemäß einer Rechteinformation (RO1, R02) gemäß einem Verfahren nach einem der Ansprüchen 1 bis 5.

## Claims

1. Method for protecting a virtual machine (VM1, VM2), wherein by means of a client (ERM-Client) which is embodied as an additional function of a hypervisor (H-OS) or of a virtual machine monitor (VMM), the following steps are executed:
- Creating a copy of the virtual machine (VM1, VM2),
- Encrypting the copy of the virtual machine (VM1, VM2) with a private key,
- Providing at least one item of rights information (RO1, RO2) comprising the private key, a usage authorization and a reference to an access authorization,
- Assigning the rights information (RO1, RO2) to the encrypted virtual machine (VM1, VM2),
wherein the rights information (RO1, RO2) is encrypted with a public key of a server,
- the encrypted virtual machine (VM1, VM2) and the assigned rights information (RO1, RO2) are stored on the server so that they are able to be retrieved; and
- Migrating the protected virtual machine (VM1, VM2), wherein by means of a client (ERM-Client) which is embodied as an additional function of a hypervisor (H-OS) or of a virtual machine monitor (VMM), the following steps are executed:
- Requesting the at least one item of rights information (RO1, RO2) from the server which is assigned to the virtual machine (VM1, VM2),
- Determining the usage authorization for operating the virtual machine (VM1, VM2) from the at least one requested item of rights information (RO1, RO2), and
- Determining the private key from the at least one requested item of rights information (RO1, RO2) for the determined usage authorization for operating the virtual machine (VM1, VM2),
- Decrypting the virtual machine (VM1, VM2) with the key determined and operating the decrypted virtual machine (VM1, VM2) within the scope of the determined usage authorization.

2. Method according to claim 1, wherein the at least one item of rights information (RO1, RO2) provided also has a time stamp.

3. Method according to one of claims 1 or 2, wherein the rights information (RO1, RO2) is stored and/or provided by means of the server.

4. Method according to one of claims 1 to 3, wherein a policy is created for the virtual machine (VM1, VM2) depending on the rights information (RO1, RO2).

5. Method according to claim 4, wherein the virtual machine (VM1, VM2) is configured, operated and/or executed depending on the policy created.

6. Device for operating a virtual machine (VM1, VM2) in accordance with an item of rights information (RO1, RO2), according to a method according to one of claims 1 to 5.

## Revendications

1. Procédé de protection d'une machine virtuelle (VM1, VM2), selon lequel les étapes suivantes sont exécutées par un client (ERM-client) qui est conçu sous forme d'une fonction supplémentaire d'un hyperviseur (H-OS) resp. d'un contrôleur de machine virtuelle (VMM) :
- production d'une copie de la machine virtuelle (VM1, VM2),
- cryptage de la machine virtuelle copiée (VM1, VM2) avec une clé secrète,
- fourniture d'au moins une information de droits (RO1, RO2) comprenant la clé secrète, une autorisation d'utilisation et une indication sur une autorisation d'accès,
- attribution de l'information de droits (RO1, RO2) pour la machine virtuelle cryptée (VM1, VM2),
l'information de droits (RO1, RO2) étant cryptée avec une clé publique d'un serveur, et
la machine virtuelle cryptée (VM1, VM2) et l'information de droits (RO1, RO2) correspondante étant stockées de façon à pouvoir être appelées sur le serveur, et
- migration de la machine virtuelle (VM1, VM2) protégée, dans laquelle les étapes suivantes sont exécutées par un client (ERM-client) qui est conçu sous forme d'une fonction supplémentaire d'un hyperviseur (H-OS) resp. d'un contrôleur de machine virtuelle (VMM) :
- demande de la au moins une information de droits (RO1, RO2) affectée à la machine virtuelle (VM1, VM2) au serveur,
- détermination de l'autorisation d'utilisation pour exploiter la machine virtuelle (VM1, VM2) à partir de la au moins une information de droits demandée (RO1, RO2), et
- détermination de la clé secrète à partir de la au moins une information de droits demandée (RO1, RO2) pour l'autorisation d'utilisation déterminée pour exploiter la machine virtuelle (VM1, VM2),
- décryptage de la machine virtuelle (VM1, VM2) avec la clé déterminée et exploitation de la machine virtuelle (VM1, VM2) décryptée dans la portée de l'autorisation d'utilisation déterminée.

2. Procédé selon la revendication 1, dans lequel la au moins une information de droits fournie (RO1, RO2) comprend en outre un marquage de temps.

3. Procédé selon l'une des revendications 1 ou 2, dans lequel l'information de droits (RO1, RO2) est stockée et/ou fournie au moyen du serveur.

4. Procédé selon l'une des revendications 1 à 3, dans lequel une politique est établie pour la machine virtuelle (VM1, VM2) en fonction de l'information de droits (RO1, RO2).

5. Procédé selon la revendication 4, dans lequel la machine virtuelle (VM1, VM2) est configurée, exploitée et/ou exécutée en fonction de la politique établie.

6. Dispositif pour exploiter une machine virtuelle (VM1, VM2) en fonction d'une information de droits (RO1, RO2) selon un procédé selon l'une des revendications 1 à 5.
